Europäisches Patentamt

European Patent Office

Office européen des brevets

(11) Publication number: **0 440 993 A1**

## (12) EUROPEAN PATENT APPLICATION

(21) Application number: **90200249.2**

(22) Date of filing: **05.02.90**

(51) Int. Cl.⁵: **B07B 9/00, B03B 9/06, B03B 9/04**

(43) Date of publication of application:
**14.08.91 Bulletin 91/33**

(84) Designated Contracting States:
**AT BE CH DE DK ES FR GB GR IT LI LU NL SE**

(71) Applicant: **MULTI MINERALS**
**Lierenbout 12**
**NL-5283 AT Boxtel(NL)**

(72) Inventor: **Van Hoegee, Jan**
**Lierenbout 12**
**NL-5283 AT Boxtel(NL)**

(74) Representative: **Pieraerts, Jacques et al**
**Bureau Gevers S.A. rue de Livourne 7 bte 1**
**B-1050 Bruxelles(BE)**

(54) **A method and a device for separating from residual materials products, which can be recovered for a further treatment.**

(57) The invention concerns a method and a device for separating products, which are recovered from an economical point of view, from environmental consideration and/or for further treatment, from residual materials, characterized in that, in a first phase, the residual materials are subjected to a sieve treatment in order to devide them in a first fraction, the dimensions of which result in a product which can be used as a foundation material and in a second fraction which can be divided, on the one hand, into products from which the ferrometals can be separated from the non-ferrometals and, on the other hand, into inferior products which will, dependant on temporary or local needs, either or not be used again.

Fig.1.

This invention relates to a method for separating products, which have to be recovered from an economical point of view, from environmental considerations and/or for a futher treatment, from residual materials such as a.o. the residual ashes of household refuse incineration and/or car demolition materials.

In spite of the important reduction of the original volume household refuse, the residual ashes originating from household refuse incineration still involve a considerable mass which, due to its lack of homogenity, can difficultly or not at all be applied for any purpose. The same can be said of residual materials originating from the car demolition industry.

The object of the invention is to provide a method by which the recovery of useful, economical valuable products can be taken into consideration. It seems that for this more and more topical problem, no solution has been found upto now. The term "solution" involves that it has to be possible that the relatively small portion of valuable products can be recovered in an economical way from the residual materials mass.

In order to realize this according to the invention, the residual materials are subjected, in a first phase, to a sieve treatment in order to separate them into a first fraction, the dimensions of which result in a product which can be used a.o. as a foundation material for ground stabilization, and into a second fraction which can be separated, on the one hand, into products from which the ferrometals can be separated from the non-ferrometals and, on the other hand, into inferior products which will, dependant on temporary or local needs, either or not be used again.

Still according to the invention, said first fraction is subjected to a sieve treatment in a sieve having a mesh size between 4 and 25 mm.

In a preferably applied embodiment, said first fraction is subjected to a sieve treatment in a sieve having a mesh size of 20 mm at the most.

A remarkable particularity of the invention consists in that, after said sieve treatment, said second fraction is led over a surface where, in combination with a selector, the materials belonging to said second fraction are separated by so-called blow techniques into two types of products, the first of which consists of ferro- and non-ferrometals and the second type of products falls within the definition of said inferior products and are removed separately.

The invention also relates to a device for separating products, which have to be recovered from an economical point of view for a further treatment, from residual ashes of household refuse incineration and/or car demolition materials according to the invention.

In order to make it possible that the method according to the invention is applied in a reliable way, i.e. among others with a high yield, the device according to the invention is characterized in that it essentially comprises :

a) a sieve unit having a mesh size situated between 4 and 25 mm;

b) a surface, disposed downstream with respect to said sieve unit over which the materials, having dimensions larger than 25 mm, called hereinafter "rubble", are transported, and

c) a selector which detects metals and separates them from other materials by so-called blow techniques.

Still according to the invention, said selector is provided for reacting upon the presence of each little metal piece and for acting on the valves of a valve block which, on its turn, generates an air jet near each of said little metal pieces in order to project said little metal piece into a separate compartment.

Other details and advantages of the invention will appear from the following description of a method for separating products, which have to be recovered from an economical point of view, from environmental considerations and/or for a further treatment, from residual materials such as a.o. the residual ashes of household refuse incineration and/or car demolition materials. This description is exclusively given by way of example and does not limit the invention. The reference numerals relate to the annexed figures.

Figure 1 shows schematically a side view on a device according to the invention in a first embodiment.

Figure 2 shows schematically also a side view on the device according to the invention in a second embodiment.

The device is represented by these figures in its essential elements and comprises at least a supply conveyer 1 which delivers the materials 2, originating from the household refuse incineration, to a sieve unit 3. In analogous situations, materials originating from the car demolition industry, can also be supplied. The sieve unit is a vibrating sieve unit, the sieve of which shows a mesh size of dimensions between 4 and 25 mm, preferably 20 mm. Therefore, materials having a grain size of 25 mm at the most, pass through the meshes of the sieve 4 preferably however 20 mm. These materials, having the smallest dimensions, fall through the chute 5 and end up on a discharge conveyer 6. The so calibrated materials, which can be indicated by reference 7, constitute a homogeneous product which is sufficiently homogeneous to find several applications or uses. These residual materials can among others be usefully applied as soil reinforcement for road building.

This first fraction is thus, seen from an economical view point, a material which has, due to the various application possibilities, a not negligible value.

Materials, which cannot pass through the sieve 4, constitute the second fraction, consisting, on the one hand, of what will be called hereinafter "rubble" and what is clarified by reference 8.

Said second fraction consists thus also of little metal pieces 10 which can be considered as ferro- and as non-ferrometals.

The way the rubble portion is separated from the metal portion will be explained hereinafter by means of two possible embodiments of the device according to the invention.

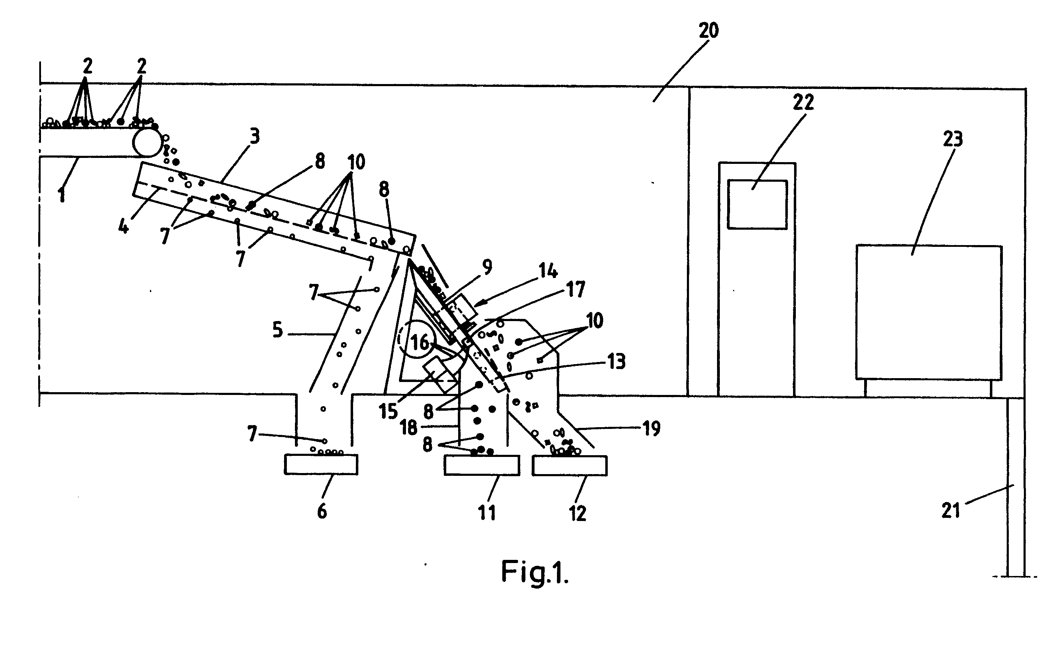

In the embodiment according to Figure 1, the rubble 8 ends on a discharge conveyer 11. The little metal pieces end on a discharge conveyer 12. The separation between the rubble 8 and the little metal pieces 10 is further enhanced by an adjustable valve 13.

The rubble 8, ending up by the gravity force directly on the discharge conveyer 11, is separated from the little metal pieces 11 by making use of a sensor 14, which detects the little metal pieces and acts upon a valve block 15, which is on its turn connected by conducts 16 to an air distribution tube 17 extending crosswise through the route of the little metal pieces 10 moving over the inclined plane 9.

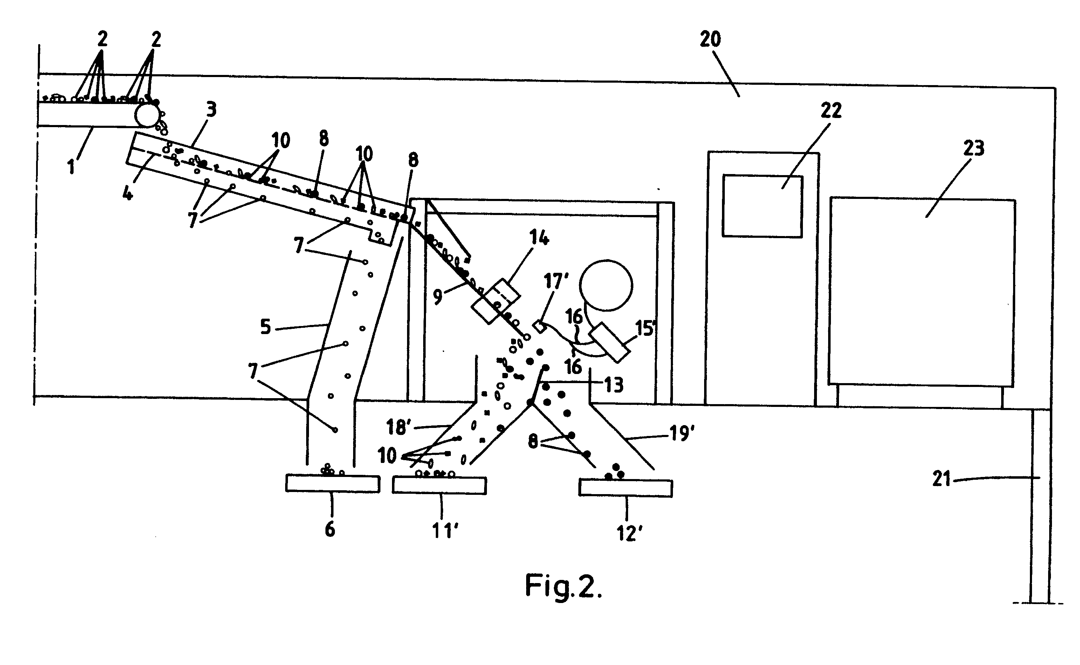

In the embodiment according to Figure 1, the air distribution tube 17 is located under the inclined plane 9, whereas in the embodiment according to Figure 2, the same component, notably the air distribution tube 17′, is located above the same inclined plane 9. For constructional reasons, the valve block 15′ is then also situated above the materials to be separated.

Whereas in the first part, the rubble 8 ends up in a compartment 18 and the little metal pieces 10 in a compartment 19, the opposite process takes place in the embodiment according to Figure 2. In the latter embodiment, the rubble 8 ends up in the compartment 18′ and the little metal pieces 10 end then up on their turn in a modified compartment 19′. Also in this latter embodiment, an adjustable valve 13′ is provided which allows or promotes the correct separation between the materials destined for the compartments 18′ and 19′. The rubble 8 finally ends up on a discharge conveyer 12′ and the little metal pieces 10 on a discharge conveyer 11′.

At the end of the inclined plane 9, a part of this inclined plane can be shaped concavely so as to influence the course of the rubble part in such a manner that it necessarily ends up in compartment 19′.

The inclined plane 9 can be replaced by a conveyer which can be permeable for air, if necessary, so that the air distribution tube can be mounted between the two conveyer strips. When using a conveyer, such a component can be divided into two conveyers. By giving both conveyors a different speed, the used blow techniques can be applied under optimal circumstances. To this end, the second conveyor (or the conveyer located the most downstream) will be driven at a higher speed resulting in a better spreading of the products to be separated.

The above described, essential elements of the device according to the invention can be mounted in a mobile entity 20, equiped with extendible feeth 21, so that all of or a part off the separation steps can take place on the appropriate place with a minimum of transport means. The mobile entity 20 is provided with a control base 22 for controlling the components from the device which can be controlled from this control base. Also at least one compressor 23 takes care that the necessary air pressure is present in the air distribution tubes.

By using a mobile device according to the invention, a pretreatment can take place in certain cases at household refuse incinerators.

The invention is of course not limited to the above described embodiments and many modifications could be applied thereto without leaving the scope of the patent application.

## Claims

1. A method for separating products, which have to be recovered from an economical point of view, from environmental considerations and/or for a further treatment, from residual materials such as a.o. the residual ashes of household refuse incineration and/or car demolition materials, characterized in that, in a first phase, the residual materials are subjected to a sieve treatment in order to separate them into a first fraction, the dimensions of which result in a product which can be used a.o. as a foundation material for ground stabilization, and into a second fraction which can be separated, on the one hand, into products from which the ferrometals can be separated from the non-ferrometals and, on the other hand, into inferior products which will, dependant on temporary or local needs, either or not be used again.

2. A method according to claim 1, characterized in that said first fraction is subjected to a sieve treatment in a sieve having a mesh size between 4 and 25 mm.

3. A method according to claim 2, characterized in that said first fraction is subjected to a sieve treatment in a sieve having a mesh size of 20 mm at the most.

4. A method according to anyone of claims 1 to 3, characterized in that, after said sieve treatment, said second fraction is led over a surface where, in combination with a selector, the materials belonging to said second fraction are separated by so-called blow techniques into two types of products, the first of which consists of ferro- and non-ferrometals and the second type of products falls within the definition of said inferior products and are removed separately.

5. A method according to claim 4, characterized in that use is made of blow techniques, the air volume, which is blown in, is determined by the weight of the metal particles to be moved, present in said second fraction.

6. A device for separating products from residual materials, such as a.o. the residual ashes originating from household refuse incineration and/or car demolition materials, characterized in that it essentially comprises :

a) a sieve unit having a mesh size situated between 4 and 25 mm;

b) a surface, disposed downstream with respect to said sieve unit over which the materials, having dimensions larger than 25 mm, called hereinafter "rubble", are transported, and

c) a selector which detects metals and separates them from other materials by so-called blow techniques.

7. A device according to claim 6, characterized in that said selector is provided for reacting upon the presence of each little metal piece and for acting on the valves of a valve block which, on its turn, generates an air jet near each of said little metal pieces in order to project said little metal piece into a separate compartment.

8. Device according to olaim 7, characterized in that a tube, provided with blow nozzles for directing said air jets, is disposed crosswise with respect to said surface.

9. A device according to claim 8, characterized in that said air jet is directed upwards so that said little metal pieces are moved further than said rubble, which falls down due to the gravity.

10. A device according to anyone of claim 7 to 9, characterized in that said air jet is directed downwards so that said little metal pieces are caught in a compartment which is provided upstream with respect to the compartment in which said rubble lands due to inertia and gravity.

11. A device according to claim 10, characterized in that an adjustable valve, mounted around a horizontal axis, is disposed between said two compartments.

12. A device according to anyone of claims 7 to 11, characterized in that a discharge means is provided at the bottom of each of said compartments.

13. A device according to claim 12, characterized in that said discharge means consists of a conveyer.

14. A device according to anyone of claims 6 to 13, characterized in that said surface is an inclined plane which extends slantingly downwards into the direction according to which the materials are moving in the device.

15. A device according to anyone of claims 6 to 13, characterized in that said surface is formed by a conveyor section.

16. A device according to anyone of claims 6 to 15, characterized in that it is constituted as a movable entity.

Fig.1.

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4541530 (KENNY ET AL) <br> * column 1, lines 21 - 40 * <br> * column 2, lines 4 - 19 * <br> * column 2, lines 43 - 68; figures 1, 2 * | 1 | B07B9/00 <br> B03B9/06 <br> B03B9/04 |
| A | | 4, 6-9, 12-14 | |
| A | EP-A-0271608 (SMULDERS GERWEN BV) <br> * column 1, lines 1 - 18 * <br> * column 2, lines 19 - 50 * <br> * column 3, lines 34 - 41; figures * | 1 | |
| A | EP-A-0220853 (KELLER) <br> * column 1, lines 4 - 9 * <br> * column 2, lines 24 - 36 * <br> * column 4, lines 25 - 53 * <br> * column 5, lines 47 - 51; claim 1; figure 1 * | 1-3 | |
| A | EP-A-0310539 (NOELL GMBH) <br> * column 2, lines 13 - 43 * | 1 | TECHNICAL FIELDS SEARCHED (Int. Cl.5 ) <br><br> B07B <br> B03B <br> B07C |

The present search report has been drawn up for all claims

| Place of search | Date of completion of the search | Examiner |
|---|---|---|
| THE HAGUE | 05 OCTOBER 1990 | VAN DER ZEE W.T. |

EPO FORM 1503 03.82 (P0401)